# EUROPEAN PATENT APPLICATION

(11) **EP 1 443 579 A2**
(43) Date of publication of application: **04.08.2004**
(21) Application number: 03016216.8
(22) Date of filing: 17.07.2003
(51) Int. Cl.: H01M 8/02

(54) **Seal structure of fuel cell unit and manufacturing method of the same**

(30) Priority: 19.07.2002 JP 2002211556
(71) Applicant: TOYOTA JIDOSHA KABUSHIKI KAISHA, Aichi-ken 471-8571 (JP)
(72) Inventor: Hayashi, Tomokazu, Toyota-shi, Aichi-ken, 471-8571 (JP); Kato, Chisato, Toyota-shi, Aichi-ken, 471-8571 (JP)
(74) Representative: Leson, Thomas Johannes Alois, Dipl.-Ing.

(57) **Abstract**

The invention relates to a seal structure of a fuel cell unit (10) which permits easier rebuilding (reassembling) and recycling of the fuel cell unit (10), and a manufacturing method of the same structure. The seal structure of a fuel cell unit (10) in which a plurality of stacked components of the fuel cell unit (10) are sealed, comprising: a sealant (32) is provided which is made of a material which maintains an initial material state even under an environment where the fuel cell unit (10) is used, the material being selected from a gel material, high viscosity material and pressure-sensitive adhesive material, a retaining portion (33) is formed at least one of two of the components of the fuel cell unit (10) between which the sealant (32) is interposed, characterized in that the retaining portion (33) is arranged to prevent the sealant (32) from moving. Also, the process of hardening the sealant is performed as a process, which is different from and precedes the process of stacking the components.

## Description

### BACKGROUND OF THE INVENTION

### 1. Field of Inventions

The invention relates to a seal structure for a fuel cell unit and a manufacturing method of same.

### 2. Description of Related Art

A solid polymer electrolyte fuel cell unit is constituted by MEAs (i.e., Membrane-Electrode Assemblies) and separators, which are stacked on the top of another. Each MEA includes an electrolyte membrane formed by an ion-exchange membrane, an electrode (i.e., anode, fuel electrode) formed by a catalyst layer which is provided on one side of the electrolyte membrane, and another electrode (i.e., cathode, air electrode) formed by a catalyst layer which is provided on the other side of the electrolyte membrane. Diffusion layers are provided between the MEA and the separators on both the anode and cathode sides. In each separator are formed a fuel gas passage for supplying fuel gas (i.e., hydrogen) to the anode, an oxidizing gas passage for supplying oxidizing gas (i.e., oxygen, normally, air) to the cathode, and a coolant passage serving as a path through which coolant (i.e., cooling water) flows. A cell is constituted by stacked MEA and separators, and a module consists at least of one cell. A stack body is formed by stacking a plurality of the modules. Next, terminals, insulators, and end plates are put at both ends of the stack body in a direction that the cells are stacked (will be referred to as a "cell stacking direction"), and the stack body is then clamped in the same direction and fixed using screw bolts, nuts, and fastening members (e.g., tension plates), which are oriented in the cell stacking direction outside of the stack body. This is how a "stack" is assembled. On the anode side of each cell, reactions occur in which hydrogen molecules are decomposed into hydrogen ions (i.e., protons) and electrons (H² → 2H⁺ + 2e⁻). The hydrogen ions move through the electrolyte membrane to the cathode side. On the cathode side, other reactions occur in which water is produced from oxygen molecules, hydrogen ions and electrons (2H⁺ + 2e⁻ + (1/2) O₂ → H₂O). The electrons are produced at the anode of the adjacent MEA and move to the cathode side through the separator, or produced at the anode of a cell located on one end of the stack and move to the cathode of another cell located on the other end of the stack through an external circuit. For permitting such an operation of the fuel cell unit, it is necessary to seal between separators, or between a separator and an electrolyte membrane in order to prevent a fuel gas, oxidizing gas and coolant from leaking to the outside or being mixed with each other, as disclosed in Japanese Patent Laid-Open Publication No. 8-45517. To this end, the following seal structures and methods are conventionally adopted:
i) Using adhesive for assuring sufficient gas seal quality (adhesive seal);
ii) Directly clamping an electrolyte membrane between separators (pressure seal); and
iii) Interposing a rubber sheet, an O-ring, or the like, between an electrode and a separator (pressure seal using seal members).

However, the above conventional seal structures involve the following problems. First, described below are problems which may occur when the adhesive seal is adopted:
i) Adhering the components of a module to each other makes it difficult to disassemble the module once assembled, thus hindering easy rebuilding and recycling of the module.
ii) When assembling works (i.e., MEAs) into a module, it is necessary to heat and pressurize the works while holding them in a fixed state. At this time, adhesive is kept pressed by applying load thereto until it hardens. Thus, the heating and pressurizing processes need to be simultaneously performed during assembly of the module. To achieve a sufficient level of productivity, therefore, it is necessary to use as many fixing apparatuses as required depending on the time taken for hardening the adhesive. Nevertheless, the number of works that can be set in one fixing apparatus at one time is limited. In view of this, it is conceivable that the adhesive seal tends to make the productivity low.
iii) Seal is only effected by adhesive force. Therefore, when the adhesive force deteriorates due to degradation of materials (i.e., adhesive, adhered members), the seal quality accordingly decreases, so it is difficult to assure a long-term seal reliability.
iv) Adhesive layers and other portions of a module usually have different expansion coefficients. When the pressure on the surfaces of electrodes changes as the product temperature changes, the contact resistance changes accordingly, namely the battery performance changes depending upon temperature.
v) When the pressure on the surfaces of electrodes changes due to creeping of the adhesive, the contact resistance changes accordingly, and the fuel cell performance thereby changes.
vi) The adhesive need be applied over a large width in order to assure a sufficient gas seal quality.
vii) The adhesive may spread out of a work and form burrs. This requires an extra process of removing the burrs.

Next, the following are the problems which may occur when the "pressure seal" or "pressure seal using seal members" is adopted:
i) The components of the module are not integrated, and therefore, the components may come apart from each other during assembly of the module. Thus, it is difficult to handle each module during assembly.
ii) When the surface pressure decreases due to creeping of seal rubbers or the like, different linear expansion coefficients of the components, etc., the seal quality may deteriorate.
iii) An evaluation of leaks and seal quality can not be conducted until the stack has been assembled. When replacing a defective component, therefore, it is necessary to disassemble and reassemble the whole stack, which results in a low working efficiency. Also, it is difficult to identify locations of leak. For example, when a leak is found in one component of the stack, the stack is disassembled and the component is replaced. Then, if a leak is found in another component, the stack shall be disassembled again for replacing that component.
iv) Load can be applied only after the cells have been all stacked.
   Therefore, each component easily displaces while stacking the cells.

### SUMMARY OF THE INVENTION

It is therefore an object of the invention to provide a seal structure of a fuel cell unit which permits easier rebuilding (reassembling) and recycling of the fuel cell unit, and thus enhances the productivity thereof, and a manufacturing method of the same structure. It is another object of the invention to provide a seal structure of a fuel cell unit which solves at least one of the above-mentioned problems and a manufacturing method of the same structure.

A seal structure of a fuel cell unit in which a plurality of stacked components of the fuel cell unit are sealed according to one aspect of the invention includes: a sealant is provided which is made of a material which maintains an initial material state even under an environment where the fuel cell unit is used, the material being selected from a gel material, high viscosity material and pressure-sensitive adhesive material, a retaining portion is formed at least one of two of the components of the fuel cell unit between which the sealant is interposed, characterized in that the retaining portion is arranged to prevent the sealant from moving.

A manufacturing method of a seal structure of a fuel cell unit according to a further aspect of the invention includes a sealant application step in which a sealant is applied a first component of the fuel cell unit, the sealant being made of a material selected from a gel material, high viscosity material, and pressure-sensitive adhesive material and being adapted to maintain an initial material state even under an environment where the fuel cell unit is used; a hardening step of hardening the sealant; and a stacking step of stacking the first component and a second component; characterized in that: the hardening step is performed before the stacking step.

According to the seal structure of a fuel cell unit and the manufacturing method described above, the sealant is made of a material selected from a gel material, high viscosity material, and pressure-sensitive adhesive material, and the sealant is hardened before stacking the components, and the components are bonded to each other by the adhesive force of the sealant only, unlike when adhesive is used to seal the components. Accordingly, the components can be easily separated from each other at the sealed portions thereof, and the sealant can be easily removed off the components. Therefore, it is possible to disassemble the module and stack, which facilitates easier rebuilding (reassembling) and recycling of the fuel cell unit. Also, the sealant made of a gel material, high viscosity material or pressure-sensitive adhesive material maintains its initial material state, and is not subjected to any clamping load. Accordingly, the width of the sealant is kept substantially unchanged once the sealant has been applied to the component, and it is not necessary to have margins for allowing changes in the width of the sealant, unlike the conventional method using adhesive as sealant where the sealant may spread when stacking and pressurizing the works. Consequently, the width of the sealant is made smaller, and a larger area becomes available for the electrodes.

According to the manufacturing method of the invention, the process of hardening (not solidifying) the sealant to a state of a gel or high viscosity material is treated as a process which is different from and precedes that of stacking the components. Accordingly, it is possible to harden a number of works at the same time by, for example, setting the works to which the sealants have already been applied in a hardening apparatus (e.g., a furnace), or by exposing them to ultraviolet lights all at one time. Also, when the sealant is made of a pressure-sensitive adhesive material and is formed in a sheet-like shape, it is possible to prepare a number of works to which the sealants as sealant sheets have already been attached, which also improves the productivity.

Also, the sealant is made of a material selected from a gel material, high viscosity material, and pressure-sensitive adhesive material, which maintains its initial material state, rather than becoming solid. Thus, since only the adhesive force of the sealant bonds the components, the components can be easily separated at the sealed portions thereof. Also, the sealant can be easily removed off the components. Therefore, it is possible to disassemble the modules and stacks, which facilitates easier rebuilding and recycling of the fuel cell unit.

Also, since any pressurizing process or pressurizing device is not needed unlike when adhesive is used, the sealant can be applied to a number of components at one time in the following manner. The sealants are first applied to the components, and hardened to a state of a gel material or high-viscosity material by being heated in a furnace or being exposed to ultraviolet lights. Optionally, by forming the sealant of a pressure-sensitive adhesive material in a sheet-like shape and hardening it beforehand, it is possible to prepare a number of works to which the sealants as sealant sheets have already been attached.

Further, unlike the conventional methods using adhesive, modules can be formed by simply stacking the components without applying pressure to them. This drastically simplifies the procedure of assembling the modules, and thus enhances the productivity. Also, the sealant maintains its initial material state (i.e., a state of a gel material, high-viscosity material, or pressure-sensitive adhesive material), and is not subjected to any clamping load. Thus, the width of the sealant is kept substantially unchanged once it has been applied to the component. As a result, unlike the conventional method using adhesive, it is not necessary to have margins for allowing changes in the width of the sealant. This reduces the width of the sealant, and thereby increases an available area for electrodes.

Unlike the conventional method in which a liquid adhesive is squashed, the sealant does not spread out of the work, which eliminates the need for removing burrs, which may otherwise be formed. Also, since it is not necessary to apply the clamping load to the sealant, it is possible to evaluate the seal quality before assembling the works to form a stack.

Furthermore, having the spacing portion for keeping a constant distance between the components stacked on the top of another, load is applied to the spacing portion instead of the sealant. With this arrangement, unlike the conventional method using adhesive, the thickness of the MEA does not change even if the sealant creeps. This reduces or eliminates the possibility of the battery performance deteriorating due to changes in the pressure on the surfaces of the electrodes, which may otherwise occur.

Also, unlike pressure seal using O-rings, and the like, the sealant has adhesivity in at least its surface, and seal is effected by that adhesivity. Thus, works do not come apart from each other, and therefore, each module can be easily handled during assembly.

Also, the retaining portion is formed concave or convex toward the sealant, and the sealant is forced against the concave or convex retaining portion by internal pressure as it is applied, thus providing a "wedge effect." Thus, the seal quality and reliability are improved as compared to the seal by adhesive. Also, the retaining portion is formed so as to act as a "wedge" for retaining the sealant against internal pressure. This reduces or eliminates the possibility of the sealant displacing due to creeping of the sealant or the different thermal expansion coefficients of the sealant and components, thus assuring improved seal reliability.

Also, the components are insulated at the spacing portion when they are stacked, and the spacing portion is formed along the periphery of the cell. This arrangement makes it possible to easily insert an insulating sheet, or the like, between the components, namely easily achieve insulation between them.

### BRIEF DESCRIPTION OF THE DRAWINGS

FIG. 1 is an enlarged sectional view (taken along line A-A in FIG. 5) illustrating a portion of a seal structure of a fuel cell unit according to the invention;

FIG. 2A, FIG. 2B are sectional views illustrating one example of a retaining portion of the seal structure according to the invention;

FIG. 3A, FIG. 3B are sectional views illustrating another example of the retaining portion of the seal structure according to the invention;

FIG. 4A, FIG. 4B are sectional views illustrating another example of the retaining portion of the seal structure according to the invention;

FIG. 5A, FIG. 5B are sectional views illustrating another example of the retaining portion of the seal structure according to the invention;

FIG. 6A, FIG. 6B are sectional views illustrating another example of the retaining portion of the seal structure according to the invention;

FIG. 7 (A) is a perspective view illustrating a process of applying sealants made of a gel or high viscosity material to works, in the seal structure according to the invention. FIG. 7 (B) is a perspective view illustrating a process of applying sealants made of a pressure-sensitive adhesive material to works, in the seal structure according to the invention;

FIG. 8 is a perspective view illustrating a process of applying sealants formed as polymer sheets to works, in the seal structure according to the invention;

FIG. 9 is a front view illustrating one example of a cell surface of the fuel cell unit;

FIG. 10 is a sectional view (taken along line B-B in FIG. 5) illustrating one example of the seal structure according to the invention;

FIG. 11 is a sectional view (taken along line C-C in FIG. 5) illustrating another example of the seal structure according to the invention; and

FIG. 12 is a side view illustrating one example of a stack of the fuel cell unit.

### DETAILED DESCRIPTION OF the PREFERRED EMBODIMENTS

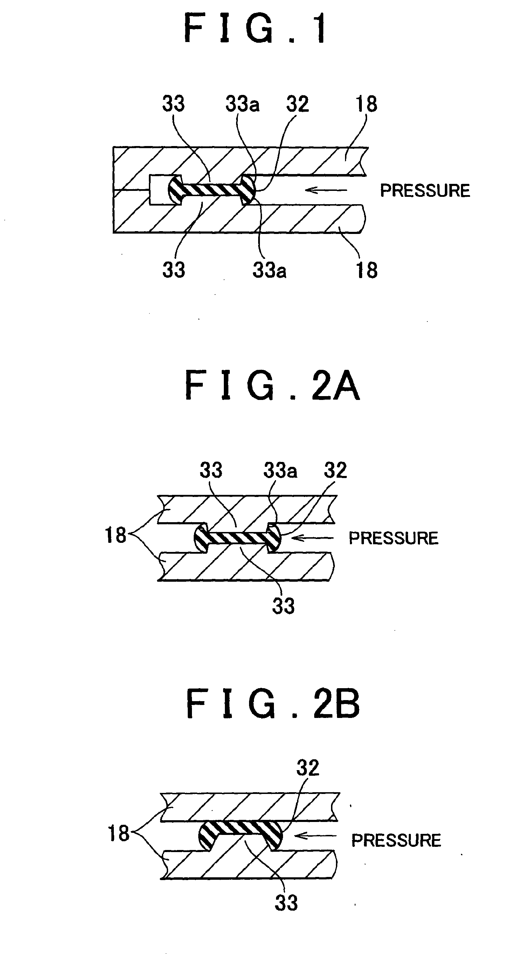

Hereafter, exemplary embodiments of a seal structure of a fuel cell unit 10 according to the invention will be described with reference to FIGs. 1 to 12. This fuel cell unit 10 is a so-called low-temperature type fuel cell unit, such as a solid polymer electrolyte type fuel cell unit. The fuel cell unit 10 is mounted on fuel-cell vehicles, for example. Note that an application of the fuel cell unit 10 is not limited to vehicles.

Referring to FIG. 1 and FIGs. 10 to 12, the fuel cell unit 10 is constituted by MEAs (i.e., Membrane-Electrode Assemblies) and separators 18, which are stacked on the top of another. Each MEA includes an electrolyte membrane 11 formed by an ion-exchange membrane, an electrode (i.e., anode, fuel electrode) 14 formed by a catalyst layer 12 which is provided on one surface of the electrolyte membrane 11, and another electrode (i.e., cathode, air electrode) 17 formed by a catalyst layer 15 which is provided on the other surface of the electrolyte membrane 11. Between the MEA and the separator 18 adjacent thereto are a diffusion layer 13 provided on the anode side of the MEA, and another diffusion layer 16 provided on the cathode side thereof.

In the separator 18, there are formed a fuel gas passage 27 for supplying fuel gas (i.e., hydrogen) to the anode 14, an oxidizing gas passage 28 for supplying oxidizing gas (i.e., oxygen, normally, air) to the cathode 17, and a coolant passage 26 serving as a path through which coolant (i.e., cooling water) flows. Moreover, a coolant manifold 29, a fuel gas manifold 30, and an oxidizing gas manifold 31 are also formed in the separator 18. The coolant manifold 29 is connected to the coolant passage 26, the fuel gas manifold 30 is connected to the fuel gas passage 27, and the oxidizing gas manifold 31 is connected to the oxidizing gas passage 28. The separator 18 is made of one selected from carbon, metal, metal-resin, and conductive resin, or various combination of these materials.

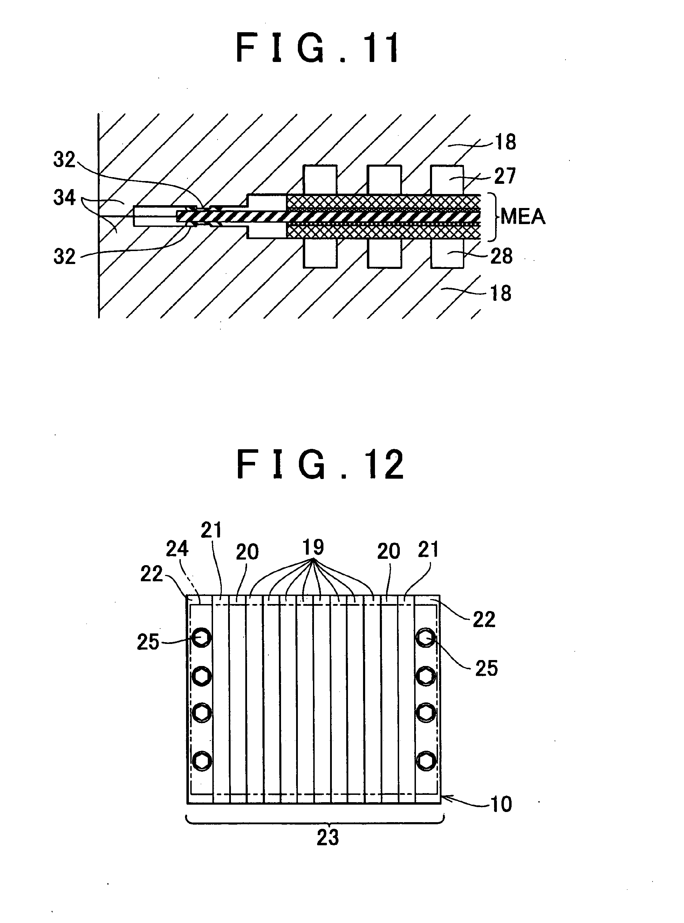

Referring to FIG. 12, each cell 19 is constituted by MEA and separators 18 stacked on the top of another, and a module consists at least of one cell 19. A stack body is then formed by stacking a plurality of the modules. Next, terminals 20, insulators 21, and end plates 22 are put at both ends of the stack body in the cell stacking direction, and the stack body is then clamped in the same direction; and is fixed using screw bolts, nuts 25, and fastening members 24 (i.e., tension plates), which are oriented in the cell stacking direction outside of the stack body. Thus, a stack 23 is assembled.

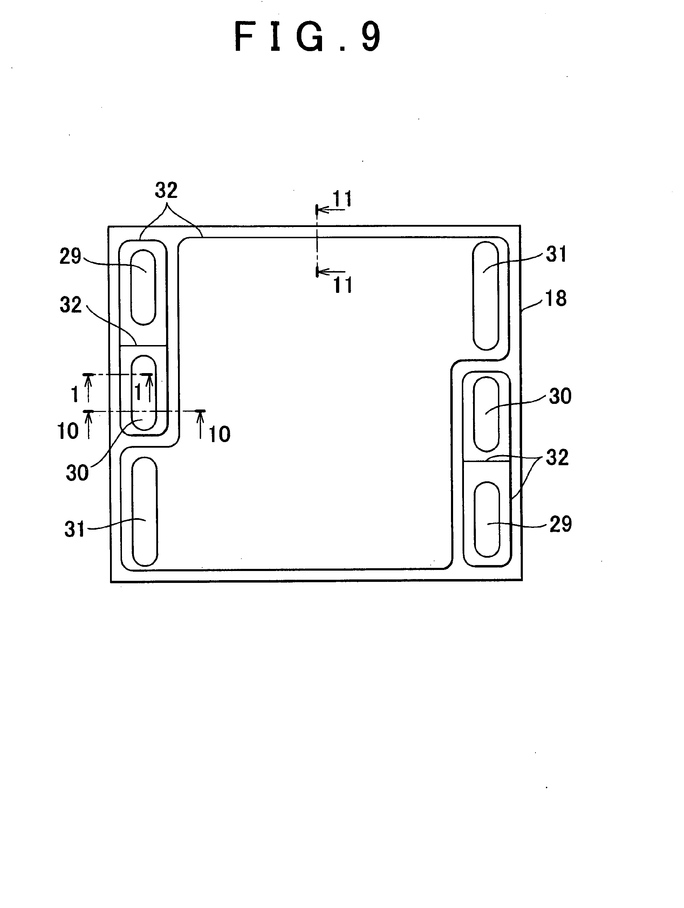

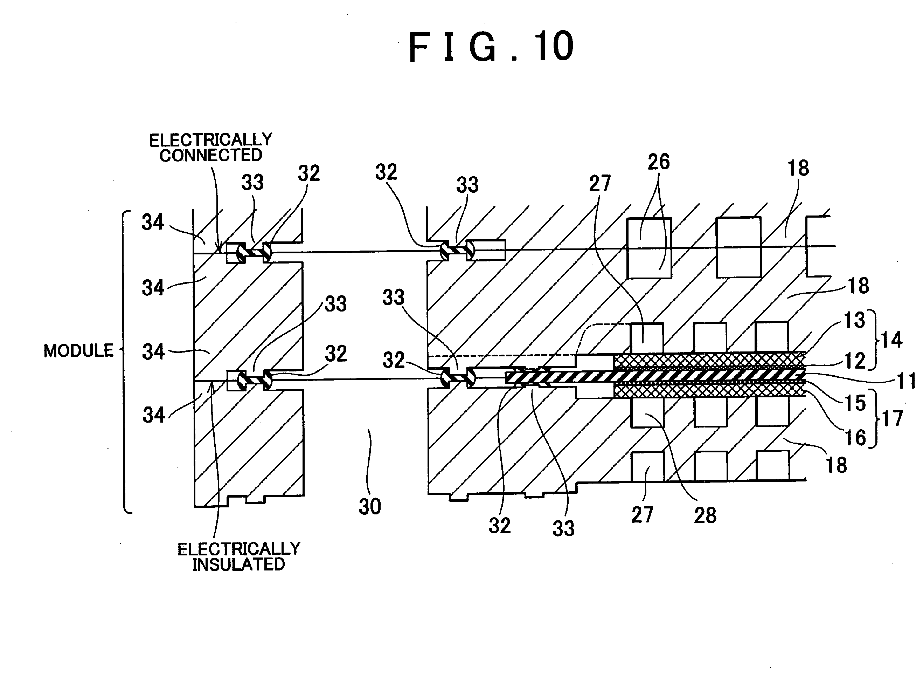

As shown in FIGs. 9 to 11, sealants 32 are provided between the components of the fuel cell unit 10 which includes at least separators 18 and electrolyte membranes 11. The sealants 32 are interposed between two separators 18, or between the separator 18 and electrolyte membrane 11. FIG. 9 shows the positions of the sealants 32 in the surface of the cell (i.e., cell surface), as viewed from above that surface. FIGs. 10 and 11 show the positions of the sealants 32 as viewed from one side of the cell. The sealants 32 seal the fluid passages 26, 27, 28 and the manifolds 29, 30, 31 so as to partition each passage or manifold from other passage or manifold of a different type and from the outside of the fuel cell unit. Thus, fluid is prevented from being mixed with others and leaking to the outside. In this way, the sealants 32 seal between the separators 18, or between the separator 18 and electrolyte membrane 11.

Conventionally, such sealants for fuel cell units are provided by adhesive, O-rings, or the like, which remain solid under an environment where the fuel cell is used. According to the embodiment, however, the sealant 32 is made of a material selected from a gel material, high viscosity material, and pressure-sensitive adhesive material, and maintains its initial material state (i.e., the same material state as when the material has been applied to a module or stack during assembly), rather than getting dry or becoming solid. Thus, using the sealant 32 offers some advantages as follows. First, since the components are bonded via the adhesive force of the sealant 32 only, the components can be easily separated at the sealed portions thereof. Also, the sealant 32 can be easily removed off the components. Therefore, it is possible to easily disassemble the modules and stacks, thus facilitating easier rebuilding and recycling of the fuel cell unit. Also, a retaining portion 33 for retaining the sealant 32 in position is formed on at least one of two adjacent components (i.e., two separators, a separator and an electrolyte membrane) sandwiching the sealant 32. If either of the two components is the separator 18, the retaining portion 33 is formed on it. Retained by the retaining portions 33, the sealant 32 is prevented from moving relative to the component, or being blown off due to internal pressure applied to the sealant 32 from fluids.

If the sealant 32 is interposed between two separators 18, a spacing portion 34 is formed on at least-one of the separators 18, integrally with or separately from it. The spacing portion 34 maintains a constant distance between the two separators 18, i.e., the portions of the respective separators 18 where the sealant 32 is applied. With this arrangement, when load is applied to the stack body for clamping it, the spacing portion 34 receives the load, instead of the sealant 32. As a result, the thickness of the sealant 32 does not change due to the load which may otherwise occur in the clamped stack body. Also, according to the above construction, modules can be assembled by simply placing a MEA on a separator, and further placing another separator on the MEA. Moreover, unlike the conventional seal methods or structures, it is not necessary to press the separators to squash the adhesive.

The spacing portion 34 is provided along the periphery of the separator 18. Therefore, the two adjacent components (i.e., separators, or a separator and an electrolyte membrane) are spaced from each other at a constant distance in the cell stacking direction. Also, the spacing portion 34 also allows a space above the retaining portion 33, and the sealant 32 is provided in this space so as to seal between the components. With the spacing portion 34 thus provided, since the sealant 32 is not subjected to load, the sealant 32 hardly spreads out in the width direction of the stack body. Therefore, unlike when adhesive is used, it is not necessary to have margins to allow such spread of the sealant 32. Also, the sealant 32 has adhesivity on at least one surface thereof. The sealant 32 may be made of an adhesive material, or may be made adhesive by applying adhesive agent or substance to its surfaces.

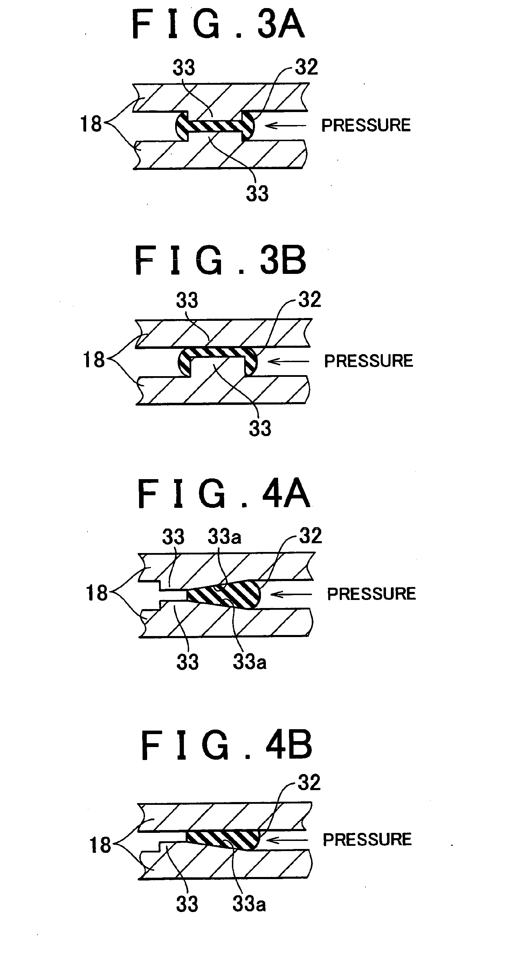

As shown in FIGs. 1, 2, 10, and 11, the retaining portion 33 is formed concave or convex toward the sealant 32. Referring to FIGs. 2 and 3, the retaining portion 33 is provided by at least one protruding rib (convex rib) which is continuously or intermittently formed. The height of the protruding rib is determined so as to allow a space for the sealant 32 between the tip of the protruding rib and the component that faces the protruding rib. With the retaining portion 33 having such a concave or convex shape, the sealant 32 provides a so-called "wedge effect" by being forced against the retaining portion 33, which results in further improved seal quality. Rather than being such a concave or convex portion, the retaining portion 33 may merely be a plane portion contacting with the sealant 32, and may be made adhesive through a plasma treatment, etc. More specifically, a plasma treatment activates the surface of the plane portion, thus strengthening the adhesion with the sealant 32.

FIGs. 2 to 6 show cross sections of the retaining portions 33 formed in various concave or convex shapes. FIGs. 2A and 2B show the case where the retaining portion 33 is formed by a protruding rib having tapered portions 33a on both sides along the width direction thereof, where a fluid pressure is applied from both sides. In FIG. 2A, the protruding ribs 33 thus formed are provided on both two components facing each other. While the two components are both separators in the examples shown in FIGs. 2 to 6, they may instead be a separator and an electrolyte membrane. In FIG. 2B, the above protruding rib is only provided on one of the components. FIGs. 3A and 3B show the case where the retaining portion 33 is formed by a protruding rib having a tapered portion 33a on neither side along the width direction thereof, where fluid pressure is applied from both sides. In FIG. 3A, the protruding ribs 33 thus formed are provided on both the two components facing each other. In FIG. 2B, on the other hand, the protruding rib is only provided on one of the components.

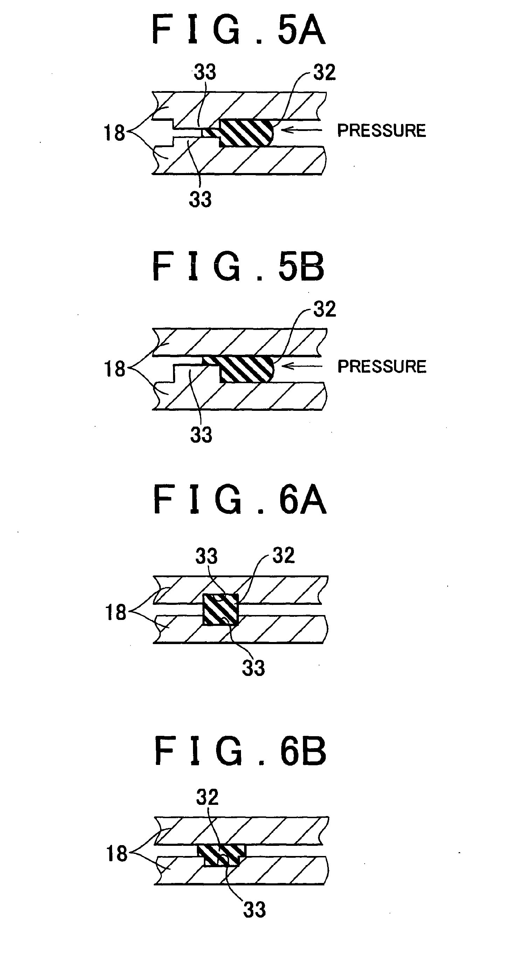

FIGs. 4A and 4B show the case where the retaining portion 33 is formed by a protruding rib having a tapered portion 33a on one side along the width direction thereof, which is subjected to fluid pressure (i.e., internal pressure). In FIG. 4A, the retaining portions 33 thus formed are provided on both the two components facing each other. In FIG. 4B, on the other hand, the protruding rib is only provided on one of the components. Similarly, FIGs. 5A and 5B show the case where the retaining portion 33 is formed by a protruding rib which does not have a tapered portion on one side along its width direction, which is subjected to fluid pressure (i.e., internal pressure). In FIG. 5A, the protruding ribs 33 thus formed are provided on both the two components facing each other. In FIG. 2B, on the other hand, the protruding rib is only provided on one of the components.

FIGs. 6A and 6B show the case where the retaining portion 33 is formed by at lease one concave portion and the sealant 32 is caught in the concave portion, where fluid pressure (i.e., internal pressure) is applied from both sides along the width direction of the concave portion. In FIG. 6A, the concave portions 32 are provided in both the two components facing each other. In FIG. 4B, on the other hand, the concave portion is only provided in one of the components. In this case, the aforementioned wedge effect of the sealant 32 acts at an edge of the concave portion, which bites into the sealant 32.

When the two components are both the separators 18 that face each other through the electrolyte membrane 11 interposed therebetween, insulation is provided between the separators 18 at the spacing portion 34 in order to prevent short-circuit. This insulation can be easily achieved by inserting an insulant between the separators 18 at the spacing portion 34, or by forming an insulating membrane or layer on the top of the spacing portion 34. Since the spacing portion 34 is formed along the periphery of the cell as described above, the insulant can be easily inserted.

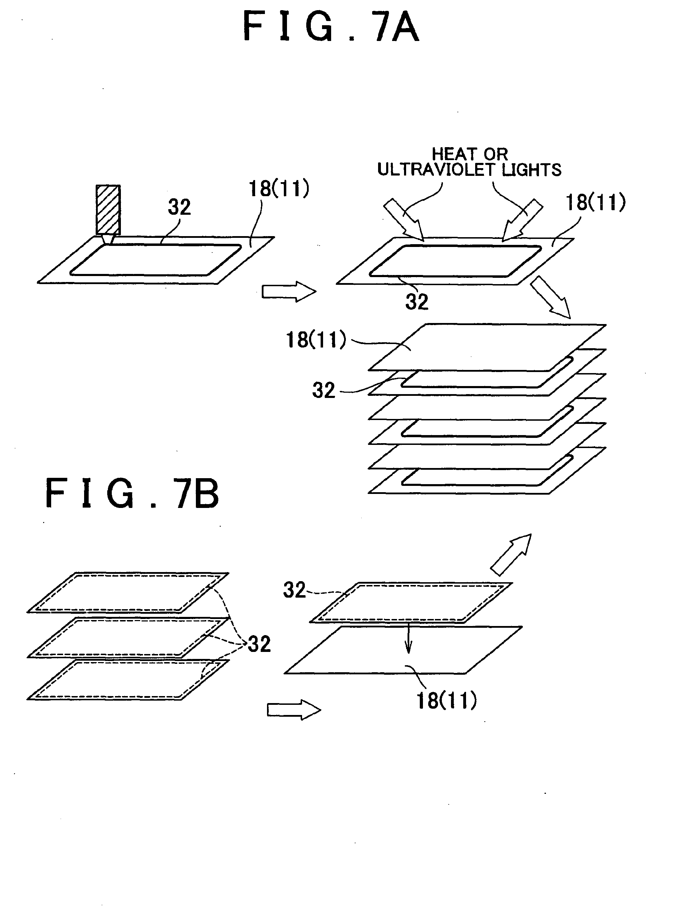

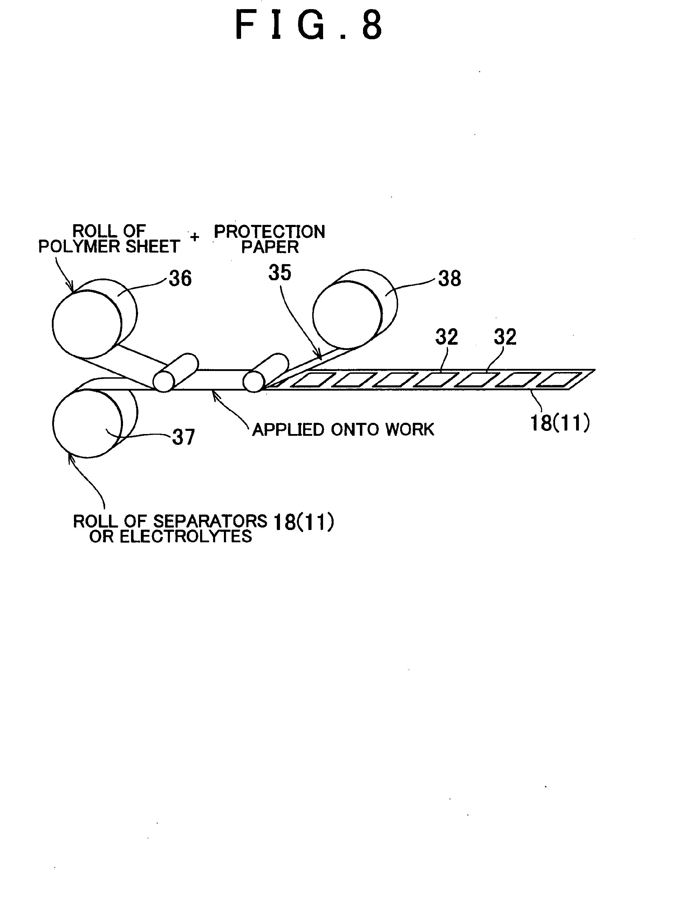

FIGs. 7A, 7B and 8 are views illustrating exemplary manufacturing methods of the seal structure according to the embodiment. As described above, the sealant 32 is made of a material selected from a gel material, a high viscosity material and a pressure-sensitive adhesive material, and maintains its initial material state, rather than becoming solid, under an environment where the fuel cell unit is used. In these examples, the processes from an application of the sealants 32 to the components to hardening of the sealants 32 (i.e., gel material, high-viscosity material, or pressure-sensitive adhesive material) are treated as being different processes from those of stacking the components, i.e., assembling the modules and stacks. That is, these manufacturing methods relate to the processes of constructing a seal structure, which are performed before stacking of the components.

Shown in FIG. 7A is one example where the sealant 32 is applied using a dispenser (e.g., a dispenser robot that applies a gel material via a nozzle). Note that the sealant 32 may be applied by other method appropriate for assuming a high productivity, such as screen printing. In case of screen printing, even if the surface of a work is not smooth, the sealant 32 can be easily applied on a sheet (i.e., protector paper). After the sealant 32 has been applied to the work, the sealant 32 is then hardened by being exposed to heat or ultraviolet lights. Here, "hardening" shall not be interpreted as solidification of the sealant 32, but shall be interpreted as a process of increasing the hardness of the sealant 32 when it is made of a gel material, or a process of increasing the viscosity of the sealant 32 when it is made of a high-viscosity material. Then, the works are stacked to form a module.

FIGs. 7B and 8 show another example where the sealant 32, instead of being made of a gel material or high viscosity material aforementioned, is a sheet made of a polymer material having an adhesivity, and is attached to the works. This offers the following advantages.
i) The sealant is already in a hardened state. Therefore, the hardening process (i.e., hardening process using heat or ultraviolet lights shown in FIG. 7A) can be omitted, which simplifies the manufacturing procedure.
ii) It is possible to seal the components (i.e., separators, electrolyte membranes) by simply attaching the polymer sheet to them. Thus, the process of applying the sealant 32 shown in FIG. 7A can be omitted, which simplifies the manufacturing procedure.
iii) It is possible to drastically improve the productivity through continuous attachment of the polymer sheets (i.e., sealants 32). FIG. 8 shows one example of a procedure enabling such a continuous attachment, which uses a roll 36 of a protection paper 35 on which the polymer sheets are attached and a roll 37 of works (i.e., separators or electrolyte membranes). Referring to FIG. 8, the polymer sheets attached on the protection paper 35 are continuously transferred to the works of the roll 37 as the polymer sheets are unwound from the roll 36 accompanying the protection paper 35 and the used protection paper 35 is rewound onto another roll 38. This method also offers the advantages and effects obtained in the above case where the sealant 32 made of a gel material is applied to the works, such as easy disassembling and reassembling (rebuilding) of modules and stacks, small seal width, and easy handling of each module during assembly.

The following explains in more detail the advantages and effects of the seal structures and manufacturing methods thereof according to the embodiment described above. That is, since the sealant 32 is made of a material selected from a gel material, high-viscosity material, and pressure-sensitive adhesive material, and does not harden under an environment where the fuel cell unit is used, the following advantages and effects are obtained. First, modules can be easily disassembled, which facilitates easier rebuilding and recycling of them.

Also, since any pressurizing process or pressurizing device is not needed unlike when adhesive is used, the sealant 32 can be applied to a number of components at one time in the following manner. The sealants 32 are first applied to the components as shown in FIG. 7A , and hardened into a state of a gel or high-viscosity material by being heated in a furnace or being exposed to ultraviolet lights. Optionally, when the aforementioned polymer sheets are used as shown in FIG. 7B, they are simply attached to the components. In this case, it is possible to prepare a number of components to which the sealants 32 have already been applied, which results in improved productivity. Further, unlike the conventional methods using adhesive, modules can be formed by simply stacking the components without applying pressure to them. This drastically simplifies the procedure of assembling modules, and thus enhances the productivity.

Also, the sealant 32 maintains its initial material state (i.e., a state of a gel material, high-viscosity material, or pressure-sensitive adhesive material), and is not subjected to any clamping load. Thus, the sealant 32 hardly spreads in the width direction thereof, that is, the width of the sealant 32 is kept substantially unchanged from when it has been applied to the component. As a result, unlike the conventional method using adhesive, it is not necessary to have margins for allowing changes in the width of the sealant 32. This reduces the width of the sealant 32, and thereby increases an available area for electrodes. Unlike the conventional method in which a liquid adhesive is squashed, the sealant does not spread out of the work, which eliminates the need for removing burrs, which may otherwise be formed. Also, since it is not necessary to apply the clamping load to the sealants 32, it is possible to evaluate the seal quality before assembling the works to form a stack.

Furthermore, in the case where the sealant 32 is formed into a certain pattern or shape such as an annular shape (i.e., closed shape), on other object before being applied or transferred to a work, such as when the sealant 32 is formed into an annular shape on a sheet and is transferred to a work from the sheet, it reduces or eliminates the possibility of the sealant 32 being hindered from hardening by resinous substances which exist on or within the work, and which have a property of hindering the hardening of the sealant 32. Also, when the sealant 32 is a sealant made of thermoplastic high polymer, such as a thermoplastic elastomer sheet, it is possible to recycle the sealant 32 as well as the electrodes. Also, the sealant 32 can be used to both seal between the modules (i.e., between the separators), and between the components in one module (i.e., between the separator and electrolyte membrane, or between the separators). Namely, other sealants or seal members (e.g., rubber gasket, adhesive) can be replaced by the sealant 32, thus reducing the number of seal components.

When sealed by "surface-pressure sealants", such as rubber gaskets, by means of which seal is effected via pressure on their surfaces, it is necessary to ensure a certain level of friction force for preventing displacement of the sealants which may be caused in a vehicle collision, or the like. In order to obtain the friction force, for example, a large magnitude of load is continuously imposed to the sealants, or a component(s) for retaining (i.e., clamping) the stack from the outside is used. Moreover, when using the surface-pressure sealants, such as rubber gaskets and O-rings, it is necessary to apply load for compressing sealed portions, as well as the load needed for electrodes (i.e., surface pressure between a diffusion layer and a separator rib). However, such load for compressing the sealed portion is not needed when the sealant 32 made of a gel material, high-viscosity material, or pressure-sensitive adhesive material, is used, and seal is effected through the wedge effect of the sealant 32. As a result, the required resistance of each component (e.g., separator, resin frame) against load can be set lower, so each component is able to be made simple in its construction and thin in its thickness, which leads to reduced product weight. Further, when a load applied to the seal can be reduced, a clamping load applied to the stack structure can be set to be lower. Thus, load fluctuations in the MEA portion can be suppressed, which enhances durability and performance stability of the MEA membrance.

Furthermore, having the spacing portion 34, load is applied to the spacing portion 32 instead of the sealant 32. With this arrangement, unlike the conventional method using adhesive, the thickness of MEA does not change even if the sealant 32 creeps. This reduces or eliminates the possibility of the battery performance deteriorating due to changes in the pressure on the surfaces of the electrodes, which may otherwise occur. Also, when the spacing portions 34 are formed in a convex shape and is continuously provided along the periphery of the separator 18. This increases the rigidity of the separator 18, and thus reduces the degree or possibility of warping of the separator 18, which may occur when forming the separator 18.

Also, unlike when seal is effected through an application of pressure to the sealants and components, the sealant 32 has adhesivity at least on its surface and seal is effected by that adhesivity. Thus, works do not come apart from each other, and therefore, each module can be easily handled during assembly. Also, when a sheet-shaped pressure-sensitive adhesive material is used as the sealant 32, the productivity can be improved by applying the sealants 32 on the protection paper in a certain pattern, and attaching them to the works.

When the retaining portion 33 is formed concave or convex toward the sealant 32, the sealant 32 is forced against the concave or convex retaining portion 33, i.e., a step or tapered portion thereof, by internal pressure as it is applied, thereby achieving improved seal quality and reliability as compared to the seal by adhesive. Also, the retaining portion 33 is formed so as to act as a "wedge" for retaining the sealant 32 against internal pressure as aforementioned. This reduces or eliminates the possibility of the sealant 32 displacing due to creeping of the sealant 32 or the different thermal expansion coefficients of the sealant 32 and components (i.e., separator 18, electrolyte membrane 11), thus assuring an improved seal quality. Also, the separators 18 are insulated at the spacing portion 34 when they are stacked, and the spacing portion 34 is formed along the periphery of the cell. This arrangement enables an insulating sheet, or the like, to be easily inserted between the separators 18, namely enables insulation to be easily achieved between them.

Also, since the process of hardening the sealant to a state of a gel material or high-viscosity material is treated as a process which is different from and precedes the process of stacking the components, as shown in FIG. 7A, it is possible to harden a number of works at the same time by, for example, setting the works to which the sealants 32 have already been applied in a hardening apparatus (e.g., a furnace), or by exposing them to ultraviolet lights all at one time. Thus, the productivity improves. Also, when the sealant 32 is formed of a pressure-sensitive adhesive material in a sheet-like shape and is hardened beforehand as shown in FIG. 7B, it is possible to prepare a number of works to which the sealants 32 as sealant sheets have already been attached, which also improves the productivity. Also, as shown in FIG. 8, using a roll of the polymer sheets and attaching them to works enables a continuous production and thus improves the productivity drastically.

The invention relates to a seal structure of a fuel cell unit (10) which permits easier rebuilding (reassembling) and recycling of the fuel cell unit (10), and a manufacturing method of the same structure. The seal structure of a fuel cell unit (10) in which a plurality of stacked components of the fuel cell unit (10) are sealed, comprising: a sealant (32) is provided which is made of a material which maintains an initial material state even under an environment where the fuel cell unit (10) is used, the material being selected from a gel material, high viscosity material and pressure-sensitive adhesive material, a retaining portion (33) is formed at least one of two of the components of the fuel cell unit (10) between which the sealant (32) is interposed, characterized in that the retaining portion (33) is arranged to prevent the sealant (32) from moving. Also, the process of hardening the sealant is performed as a process, which is different from and precedes the process of stacking the components.

## Claims

1. A seal structure of a fuel cell unit (10) in which a plurality of stacked components of the fuel cell unit (10) are sealed, comprising:
a sealant (32) is provided which is made of a material which maintains an initial material state even under an environment where the fuel cell unit (10) is used, the material being selected from a gel material, high viscosity material and pressure-sensitive adhesive material,
a retaining portion (33) is formed at least one of two of the components of the fuel cell unit (10) between which the sealant (32) is interposed, **characterized in that**
the retaining portion (33) is arranged to prevent the sealant (32) from moving.

2. The seal structure according to claim 1, **characterized in that**:
the retaining portion (33) is formed at a portion of at least one of two of the components where the sealant is interposed between the two components.

3. The seal structure according to claim 1, **characterized in that**:
the retaining portion (33) is formed at least one of surfaces of the two components of the fuel cell unit (10), the surfaces facing to each other.

4. The seal structure according to any one of claims 1 to 3, **characterized in that**:
the retaining portion (33) has a surface that receives a pressure applied along a plane direction of the surfaces of the components through the sealant.

5. The seal structure according to any one of claims 1 to 4, **characterized by** further comprising:
a spacing portion (34) that keeps a constant distance between portions of the components of the fuel cell unit (10) where the sealant (32) is interposed.

6. The seal structure according to claim 5, **characterized in that**:
the spacing portion (34) is provided as part of the component.

7. The seal structure according to claim 5, **characterized in that**:
the spacing portion (34) is provided separate from the component.

8. The seal structure according to claim 5, **characterized in that**:
the spacing portion (34) is formed on at least one of the surfaces of the components, the surfaces facing to each other.

9. The seal structure according to claim 5, **characterized in that**:
the components are electrically insulated from each other at the spacing portion (34).

10. The seal structure according to one of claims 1 to 9, **characterized in that**:
the sealant (32) has adhesivity in at least a surface thereof.

11. The seal structure according to any one of claims 1 to 10, **characterized in that**:
the retaining portion (33) is formed concave or convex toward the sealant (32).

12. The seal structure according to any one of claims 1 to 11, **characterized in that**:
the two components are both separators (18).

13. The seal structure according to any one of claims 1 to 11, **characterized in that**:
the two components are a separator (18) and an electrolyte membrane (11).

14. The seal structure according to one of claims 1 to 13, **characterized in that**:
the fuel cell unit (10) is of a low-temperature type.

15. A method for manufacturing a seal structure of a fuel cell unit (10), comprising:
a sealant application step in which a sealant (32) is applied a first component of the fuel cell unit (10), the sealant (32) being made of a material selected from a gel material, high viscosity material, and pressure-sensitive adhesive material and being adapted to maintain an initial material state even under an environment where the fuel cell unit (10) is used;
a hardening step of hardening the sealant (32); and
a stacking step of stacking the first component and a second component;
**characterized in that**:
the hardening step is performed before the stacking step

16. The manufacturing method, according to claim 15, **characterized in that**:
the fuel cell unit (10) is of a low-temperature type.
